# EUROPEAN PATENT APPLICATION

(11) **EP 1 698 868 A1**
(43) Date of publication of application: **06.09.2006**
(21) Application number: 05388019.1
(22) Date of filing: 03.03.2005
(51) Int. Cl.: G01G 13/24, G01G 13/02, B65G 33/32

(54) **Weighing arrangement**

(71) Applicant: CABINPLANT INTERNATIONAL A/S, DK-5683 Haarby (DK)
(72) Inventor: Hansen, Henning Ingemann, 5683 Haarby (DK)
(74) Representative: Nielsen, Henrik Sten

(57) **Abstract**

A weighing arrangement comprising an infeed for product material to be weighed and at least one dosing mechanism for controlled conveying of product material portions from said infeed to a weighing system. The dosing mechanism comprises a motor-driven transport screw formed as a helically shaped rod positioned in a trough for conveying the product material from the infeed to the weighing system and a control unit for controlling the motor in order to deliver a desired portion of product material to the weighing system. This weighing arrangement makes it possible to provide a well-defined conveyance of product materials, which are not suited for vibrational conveyance.

## Description

### TECHNICAL FIELD

The present invention relates to a weighing arrangement such as a multihead weigher comprising an infeed or storage hopper (both to be named as infeed) for product material to be weighed, and at least one dosing mechanism for controlled conveying of product material portions from said infeed to a weighing system.

### BACKGROUND ART

In weighing arrangements of this kind it is known to use a dosing or batching mechanism comprising vibratory pans positioned as a trough for conveying product material from the infeed to the weighing system and to control the vibration in time and intensity in order to deliver a desired portion of product material to the weighing system. Such weighing arrangement can be used for a broad range of product materials, as long as the product materials can be conveyed by vibration in a sufficiently stable and organised manner. However, in connection with sticky and/or flexible product materials, the vibrational conveyance of the product material is not always sufficiently stable and well-defined, which inhibits or minimises conveyance of said products.

### DISCLOSURE OF THE INVENTION

It is the object of the present invention to provide a weighing arrangement of the kind referred to above, with which it is possible to provide a well-defined conveyance of product materials, which are not suited for vibrational conveyance, and this object is achieved with a weighing arrangement of said kind, which according to the present invention comprises the features set forth in claim 1. Said arrangement comprises motor-driven transport screws formed as a helically shaped rod and providing a well-defined conveyance of product material from the infeed to the weighing system, even if the product material is sticky and/or flexible, or for other reasons is not suited for vibrational conveyance.

### BRIEF DESCRIPTION OF THE DRAWINGS

In the following detailed part of the present description, the invention will be explained in more detail with reference to the exemplary embodiment of a weighing system according to the invention shown in the drawings, in which
Fig. 1 shows a top view of the infeed for product material and eighteen motor-driven transport screws positioned in troughs for conveying the product material from the infeed to a weighing system (not shown),
Fig. 2 shows a cross sectional view of the arrangement in Fig. 1 along A-A,
Fig. 3 shows a detail in Fig. 2 indicating an example of a connection between the motor and the transport screw.

### DESCRIPTION OF THE PREFERRED EMBODIMENTS

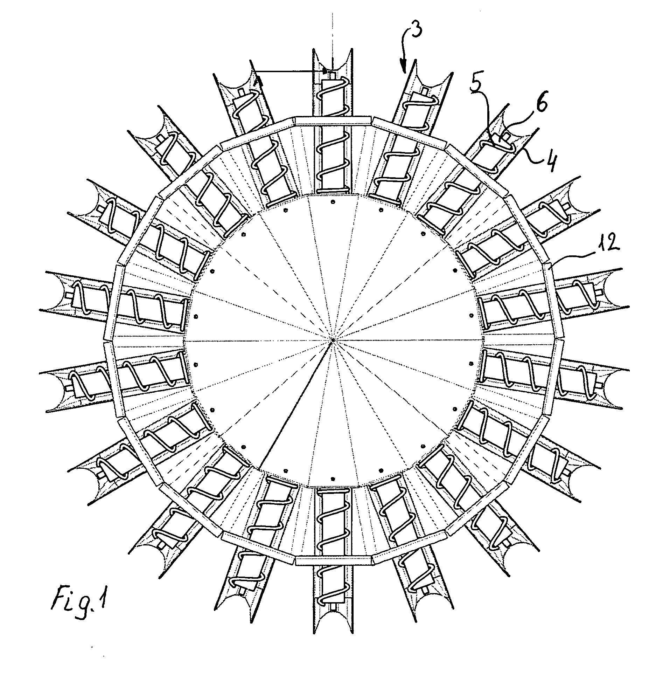

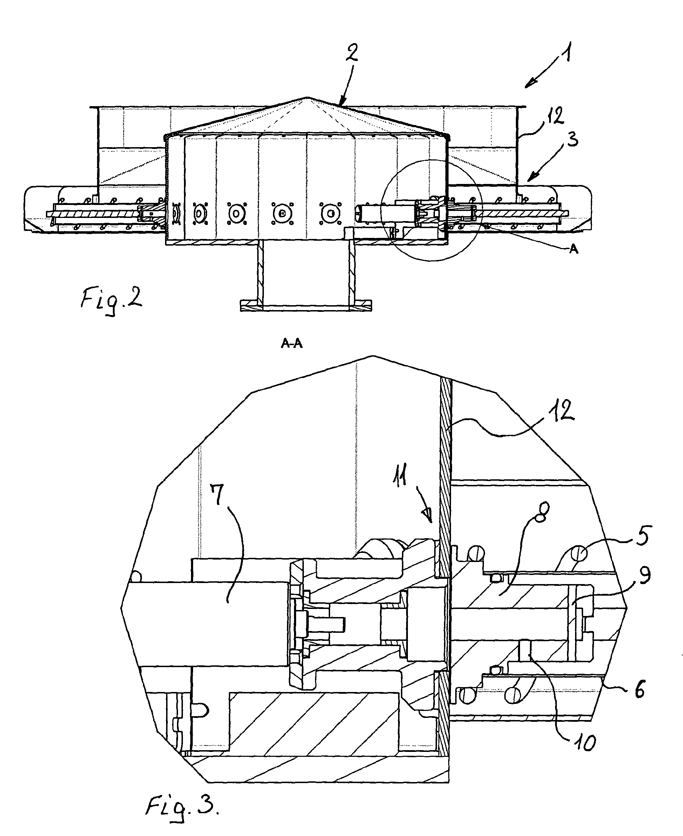

The apparatus shown in Fig. 1 comprises an infeed 1 having eighteen dosing mechanisms 3 positioned symmetrically along the circumference of the infeed 1. Each dosing mechanism 3 comprises a trough 4, in which a transport screw 5 is positioned and driven by a motor 7 (see Fig. 3). Positioned coaxially with the transport screw 5 is a core 6, which is considered to be optional and which core 6 may have any diameter less than the inner diameter of the transport screw 5.

The infeed 1, shown in cross section in Fig. 2, comprises a conical central bottom part 2, which provides a distribution of product material towards the outer wall 12 of the infeed 1. The conical central bottom part 2 of the infeed ends at a distance from the outer wall 12 of the infeed and therebetween the product material falls down into the individual troughs 4, in which the transport screw 5 and a possible core 6 are positioned to convey product material out of the infeed 1 in a controlled manner in order to deliver controlled portions of product material to a weighing system positioned below the end of the trough 4.

As shown in Fig. 3, the connection between the motor 7 and the transport screw 5 comprises a bushing 8 onto which the transport screw 5 is connected permanently, e.g. by welding, or said bushing 8 possibly being integrated into the core 6, if present. The bushing 8 comprises a pin 9 providing a non-rotational connection to the motor-driven axle and a click-connection mechanism 10, e.g. provided by means of a spring and a ball, said ball being pressed into a recess provided in the motor axle.

In order to avoid leakage of product material from the trough 4 into the inner motor compartment, a sealing 11 is provided between the motor axle and the back wall of the trough 4.

The mounting of the motor 7 and possible provision of supplementary bearings for the axle of said motor is provided in a conventional way and needs no detailed explanation at this point.

The components in contact with the product material are preferably made of stainless steel, but other material choices can be made for different reasons, such as plastic materials, etc.

The shown apparatus functions in the following way. Product material to be weighed is conveyed to the infeed 1 in a controlled manner in order to keep a mainly constant level of product material in said infeed 1. The product material is distributed to the individual dosing mechanism 3 by the conical central bottom part 2 of the infeed. Suitable sloping surfaces between the individual troughs 4 of the dosing mechanism 3 may be provided in order to lead the product material into the individual troughs 4. The dosing mechanism 3 delivers predetermined portions of product material to the related weighing system by signals by the overall control for the weighing arrangement. The controlled, well-defined portion is delivered by the controlled speed of the motor 7 during a controlled period of time. In order to optimise the dosing, the subsequent weighing of the delivered portion is used to adjust the period of time and/or the motor speed in order to adjust the dosage of product material from each individual dosing mechanism 3.

Typical values for the rotational speed of the transport screw 5 are 10-100 revolutions per minute and typical period of running times are between 50 and 2000 ms.

The following weighing and combination of dosed partial portions to final portions shall be as close as possible to the desired weight of the final portions by combining a predetermined number of dosed and weighed portions, is well-known within the art and need not be explained in further detail.

Above, the invention has been described and explained in connection with a specific embodiment thereof, as shown in the drawings, however, many variations are evident for a man skilled in the art without departing from the following claims. Among such natural deviations is another number of dosing mechanisms 3, the provision of cores 6 having a smaller diameter or completely removing the core 6 and the possibility of providing the core 6 with another outer form than the cylindrical form shown in the drawings. Furthermore, the core may be kept stationary while rotating the transport screw 5 instead of being rotated synchronously with the transport screw 5. It will also be evident that the opening in the side 12 of the infeed 1, through which the trough 4 extends, has to be adapted to the product material to be conveyed by the dosing mechanism 3.

## Claims

1. Weighing arrangement comprising
- an infeed for product material to be weighed,
- at least one dosing mechanism for controlled conveying of product material portions from said infeed to a weighing system,
- said dosing mechanism comprising a motor-driven transport screw formed as a helically shaped rod positioned in a trough for conveying the product material from the infeed to the weighing system and a control unit for controlling the motor in order to deliver a desired portion of product material to the weighing system.

2. Weighing arrangement in accordance with claim 1, further comprising a core positioned inside the transport screw, said core having a diameter which is less than or equal to the inner diameter of the transport screw.

3. Weighing arrangement in accordance with claim 2, wherein said core has a mainly cylindrical form.

4. Weighing arrangement in accordance with claim 2 or 3, wherein said core is rotated synchronously with the transport screw.

5. Weighing arrangement in accordance with claim 2 or 3, wherein said core is kept stationary.

6. Weighing arrangement in accordance with any of the claims 2-5, wherein said core has a fluted outer surface.

7. Weighing arrangement in accordance with any of the claims 2-6, wherein said core is exchangeable in order to facilitate different diameters for conveying of a different product and/or providing different speeds of conveyance.

8. Weighing arrangement in accordance with any of the claims 1-7, wherein said trough comprises a bottom part having a cylindrical form with a diameter corresponding to or larger than the outer diameter of the transport screw.

9. Weighing arrangement in accordance with claim 8, wherein said trough extends through an opening in the side of the infeed.

10. Weighing arrangement in accordance with any of the claims 1-9, wherein said infeed comprises a conically formed central bottom part leading the product material radially outwards to several dosing mechanisms positioned in a circular pattern around the conical bottom.

11. Weighing arrangement in accordance with claim 10, wherein the motors for driving the transport screws are positioned under the conical bottom of the infeed.

12. Weighing arrangement in accordance with any of the claims 1-11, wherein the connection between the transport screw and the core, if present, and the motor comprises a clip-on mechanism for easy assembly, disassembly, cleaning and exchange of transport screw and/or core.

13. Weighing arrangement in accordance with any of the claims 1-12, wherein said motor is controlled in speed and running time by the controller.

14. Weighing arrangement in accordance with claim 13, wherein said controller is connected to receive information on the weight of the material portions and adapted to adjust the speed and/or running time in dependence thereof.

15. Weighing arrangement in accordance with any of the claims 1-14, wherein said arrangement comprises 2-40 dosing mechanisms, such as 2-4, 4-8, 8-16, 16-40, e.g. 10-20, 20-40, preferably 16 or 18 dosing mechanisms.
